# EUROPÄISCHE PATENTSCHRIFT

(11) **EP 2 567 410 B1**
(45) Veröffentlichungstag und Bekanntmachung des Hinweises auf die Patenterteilung: **28.02.2018**
(21) Anmeldenummer: 11720369.5
(22) Anmeldetag: 09.05.2011
(51) Int. Cl.: H02S 40/44, F24J 2/46, F24J 2/20, F24J 2/50, F24J 2/52

(54) **HYBRIDKOLLEKTOR**
HYBRID COLLECTOR
COLLECTEUR HYBRIDE

(30) Priorität: 07.05.2010 CH 702102010
(43) Veröffentlichungstag der Anmeldung: 13.03.2013
(73) Patentinhaber: Bluesolar AG, 8008 Zürich (CH)
(72) Erfinder: Ramani, Ditran, 7012 Felsberg (CH)
(74) Vertreter: Hasler, Erich
(86) Internationale Anmeldenummer: PCT/CH2011/000108
(87) Internationale Veröffentlichungsnummer: WO 2011/137555

(56) Entgegenhaltungen:
- EP-A1- 0 022 389
- WO-A1-2009/061495
- DE-A1- 10 121 850
- FR-A1- 2 566 183

## Beschreibung

### Gebiet der Erfindung

Die Erfindung betrifft einen Hybridkollektor gemäss Oberbegriff des Anspruchs 1.

### Stand der Technik

Aus dem Stand der Technik sind Hybridkollektoren bekannt, welche das Sonnenlicht effizienter Nutzen, als ein Photovoltaikmodul oder ein thermischen Solarkollektor (auch als Sonnenkollektor bezeichnet) alleine. Bei Photovoltaikmodulen (PV-Modulen) gilt generell, dass deren Leistung mit steigender Temperatur abnimmt. Es wird daher versucht die Temperatur der PV-Module möglichst niedrig zu halten. Der synergistische Effekt bei Hybridkollektoren besteht nun darin, dass bei diesen Kollektoren Wärmetauscher vorgesehen sind, welche die PV-Module kühlen. Die über den Wärmeträger abgeführte Wärme kann beispielsweise für Warmwasserzwecke, Heizungsunterstützung oder Wärmepumpenunterstützung verwendet werden. Der Gesamtwirkungsgrad von Hybridkollektoren ist demnach höher als die Wirkungsgrade eines PV-Moduls oder eines Solarkollektors alleine.
Als nachteilig hat sich bei Hybridkollektoren jedoch erwiesen, dass der Wärmeübertrag von PV-Modul auf den Wärmetauscher schlecht funktioniert und dadurch der Gesamtwirkungsgrad von Hybridkollektoren verschlechtert wird. Ein Versuch, den Wärmeübertrag zu verbessern, besteht darin, für den Wärmetauscher besonders gut wärmeleitfähige Materialien, wie beispielsweise Kupfer, zu verwenden. Diese Materialien sind jedoch sehr teuer. Auch gibt es Bestrebungen, die Photovoltaik-Zellen direkt auf den Wärmetauscher zu laminieren und diese Konstruktion in einem üblichen Flachkollektorgehäuse aufzunehmen. Jedoch sind solche Hybridkollektoren in der Fertigung aufwendig und befinden sich noch in einem sehr frühen Entwicklungsstadium.
Die WO 2009/061495 A1 beschreibt einen erweiterten Solarkollektor. Der Solarkollektor umfasst ein Photovoltaik-Paneel und ein Gehäuse, welches als Wärmetauscher für das PV-Paneel dient und mit diesem verbunden ist. Das Gehäuse umfasst eine obere und eine untere Wand aus thermisch leitendem Material, bevorzugt Aluminium. Zusammen mit Seitenwänden bildet das Gehäuse einen hermetisch dichten Raum mit darin ausgebildeten Kanälen. Die obere Wand ist mit dem PV-Paneel verbunden. In einer weiteren Ausführungsform ist zwischen den beiden Wänden eine Dichtung angeordnet. Um die Dichtigkeit des Gehäuses zu verbessern, können die obere und untere Wand mit Schrauben verbunden sein, um die Dichtung zusammenzudrücken. Zwischen Wärmetauschmedium und PV-Paneel liegt jedoch immer die obere Wand, welche, wenngleich aus einem wärmeleitenden Material gefertigt, den Wärmeübergang zwischen Wärmetauschmedium und PV-Paneel verschlechtert. Um den Wärmeübergang zu verbessern, wird in der WO 2009/061495 auch vorgeschlagen zwischen PV-Paneel und oberer Wand ein wärmeleitendes Fett aufzutragen. Als weitere Alternative wird vorgeschlagen, die Kanäle an der Unterseite des PV-Paneels oder an der Oberseite der unteren Wand auszuformen. Dadurch kann die obere Wand eliminiert werden. PV-Paneel und untere Wand werden mit einem Klebstoff verbunden und abgedichtet.
Die DE 198 03 343 offenbart einen solarthermisch-photovoltaischen Dachziegelkollektor, bei welchem das Unterteil aus farbgemischtem Abfallglas und das Oberteil aus transparentem Abfallglas hergestellt sind. Dabei kann der unter der photovoltaischen Zelle liegende Absorber die Kühlung der Zelle übernehmen. Die Verbindung der Absorber untereinander wird durch elastische Schläuche mit Flanschen an beiden Seiten ausgeführt. Der Dachziegelkollektor umfasst einen Kollektorgrundkörper, auf den über eine Kunststoffdichtung das Kollektorgehäuse aufgebracht wird. Der Kollektorgrundkörper und das Kollektorgehäuse sind aus Glas im Pressverfahren oder Kunststoff hergestellt. Der Absorber ist aus gewebeverstärktem Gummi hergestellt und wird ähnlich einem Luftkissen durch Vulkanisieren von einer Ober- und einer Unterhälfte hergestellt. Er hat einen Zu- und einen Ablaufstutzen, die an den Enden als Flansche gestaltet sind. Gemäss einer Ausführungsform wird der Absorber so im Kollektorgehäuse integriert, dass er grossflächig an der photovoltaischen Zelle anliegt. Nachteilig am beschriebenen Dachziegelkollektor ist, dass er aufwändig konstruiert ist.
Die US Patentanmeldung Nr. 2004/0025931 bezieht sich auf ein Solarpaneel zur gleichzeitigen Erzeugung von Strom und Wärmeenergie. Das Paneel besteht aus einem Flüs sigkeit aufnehmenden Paneel, einem Wärmetauscher in Gestalt einer wärmeleitfähigen Platte und einem PV-Paneel. Das PV-Paneel ist mittels eines Klebers an eine Glasscheibe geklebt und liegt auf dem Flüssigkeit aufnehmenden Paneel auf, resp. ist an dessen Oberseite angeklebt. Zur Maximierung der Sonneneinstrahlung ist ein Reflektor im Abstand zum Solarpaneel angeordnet. Der Reflektor reflektiert einfallendes Sonnenlicht auf das Solarpaneel und ermöglicht so eine höhere Leistungsausbeute.

Die DE-A-101 21 850 widmet sich der Kühlung von Photovoltaikmodulen zur Erhöhung der Leistungsausbeute. Es wird vorgeschlagen, Kühlwasser auf der Rückseite eines handelsüblichen Moduls durch einen Zwischenraum zu führen, indem eine Glasscheibe mittels Silikon an das Solar-Modul geklebt wird. Dabei kann der Zufluss- und Abflussstutzen in die Silikonabdichtung eingefügt werden. Die vorgeschlagene Lösung besticht durch ihre Einfachheit, da die vordere Wand des Wärmetauscherraums durch das Photovoltaikmodul selbst gebildet ist. Das Modul ist jedoch nicht praxistauglich, da die vorgeschlagene Silikonabdichtung mittelfristig undicht werden dürfte. Auch kann der Wärmetauscher einem Überdruck nicht standhalten.

### Aufgabe der Erfindung

Aufgabe des vorliegenden Erfindung ist es daher, einen Hybridkollektor vorzuschlagen, welcher einen verbesserten Wärmeübergang von den PV-Modulen auf den Wärmeträger ermöglicht und folglich einen verbesserten Gesamtwirkungsgrad besitzt. Noch ein Ziel ist es, einen möglichst einfach aufgebauten und dementsprechend kostengünstig herstellbaren Hybridkollektor zu zeigen. Ein weiteres Ziel ist es, einen Hybridkollektor vorzuschlagen, dessen Wärmetauscher auch auf Druck belastbar ist.

### Beschreibung

Die Erfindung betrifft einen Hybridkollektor mit wenigstens einer und vorzugsweise einer Mehrzahl von Photovoltaik-Zellen, welche zwischen zwei Trägerplatten angeordnet sind, wodurch ein Trägersubstrat, vorzugsweise aus Glas, definiert ist. Die Trägerplatten können aus Glas oder Kunststoff oder einem anderen geeigneten transparenten oder nicht transparenten Material sein. Vorzugsweise ist die der Sonne zugewandte Trägerplatte aus transparentem Glas oder Kunststoff hergestellt. Die dem einfallenden Licht zugewandte Seite des Trägersubstrats kann grundsätzlich auch als Folie oder Beschichtung ausgeführt sein. In diesem Fall übernimmt die dem Licht zugewandte Seite die Aufgabe, die Photovoltaik-Zellen zu schützen. Die tragende Funktion wird in diesem Fall im Wesentlichen von der dem Licht abgewandten Trägerplatte übernommen. An der Rückseite des Trägersubstrats ist eine Rückwand im Abstand zum Trägersubstrat angeordnet. Als Rückseite ist diese Seite des Trägersubstrats zu verstehen, welche dem Sonnenlicht abgewandt ist. Eine randständige Dichtung ist zwischen dem Photovoltaikmodul und der Rückwand vorgesehen, um einen von einem Wärmeträger durchströmbaren Wärmetauscherraum zu bilden.

Erfindungsgemäss wird die Aufgabe bei einer Vorrichtung gemäss Oberbegriff des Anspruchs 1 dadurch gelöst, dass das Trägersubstrat und die Rückwand durch eine Mehrzahl von Befestigungsmitteln vorzugsweise kraftschlüssig zusammengehalten sind. Dies hat den Vorteil, dass der Wärmetauscher auch auf Druck belastet werden kann. Die Befestigungsmittel sind vorzugsweise verstell- und lösbar Befestigungselemente, welche das Trägersubstrat an einer Tragstruktur befestigen. Ein Wärmeträger, der den Wärmetauscherraum durchströmt, steht in direktem Kontakt mit dem Trägersubstrat. Dadurch, dass bei dem erfindungsgemässen Hybridkollektor auf zusätzliche Wände verzichtet werden kann, ist der Wärmeübergang zwischen dem Trägersubstrat und dem Wärmeträger deutlich verbessert. Dieser verbesserte Wärmeübergang führt zu dem angestrebten Effekt, dass die PV (Photovoltaik)-Zellen besser gekühlt werden, wodurch deren Wirkungsgrad verbessert wird. Ferner führt der verbesserte Wärmeübergang zu einer Erhöhung der Temperatur des Wärmeträgers. Auch dieser Effekt ist bei dem Betrieb eines Hybridkollektors äusserst erwünscht, weil der Wirkungsgrad des thermischen Anteils des Hybridkollektors ebenfalls verbessert wird. Da auf zusätzliche gut wärmeübertragende jedoch teure Wärmetauscherwände, welche beispielsweise aus Kupfer gefertigt sein müssen, verzichtet werden kann, können die Herstellungskosten des erfindungsgemässen Hybridkollektors niedrig gehalten werden.

Mit Vorteil ist das Trägersubstrat mittels einer Dichtung flüssigkeitsdicht an der Rückwand, welche die Rückwand des Wärmetauschers bildet, angeordnet. Die Dichtung ist vorzugsweise im Seitenrandbereich des Trägersubstrats und über den gesamten Umfang angeordnet. Die notwendige Abdichtung des Trägersubstrats und der Rückwand ist durch die Dichtung auf einfache und entsprechend kostengünstige Weise erreicht. Vorzugsweise ist die Dichtung eine elastische Gummidichtung, welche in sich geschlossen ist. Durch die Anwendung der Gummidichtung im Randbereich des Trägersubstrats ist der Wärmetauscherraum, indem der Wärmeträger aufgenommen ist, ausreichend gross bemessen. Zusätzlich bleibt im Randbereich des Trägersubstrats ausserhalb der Dichtung genügend Platz, um Befestigungsmittel zur Verbindung des Trägersubstrats mit der Rückwand vorzusehen. Wenngleich die Abmessungen des Trägersubstrats und der Rückwand in den meisten Fällen im Wesentlichen gleich gross sind, so ist es auch denkbar, dass die Rückwand das Trägersubstrat überragt. Dann kann der Hybridkollektor besonders einfach am überstehenden Bereich der Rückwand an einem tragenden Untergrund, z.B. einer Hauswand, festgelegt werden.

In einer bevorzugten Ausführungsform wirkt die Dichtung flüssigkeitsdichtend mit dem Trägersubstrat und der Rückwand zusammen, indem beide duch eine Mehrzahl von zusätzlichen Befestigungsmitteln zusammengehalten sind. Die Abdichtung des Hybridkollektors erfolgt daher in der Art und Weise, wie sie sich bei Flanschverbindungen äusserst bewährt hat und dementsprechend ausgereift ist.

In einer besonders bevorzugten Ausführungsform sind die Befestigungsmittel Schrauben, welche jeweils durch an dem Trägersubstrat vorgesehene Durchgangsöffnungen oder Löcher hindurchgeführt sind. Die Schraubverbindungen können mit Gewindemuffen oder Schraubenmuttern festgezogen werden, damit das Trägersubstrat und die Rückwand in flüssigkeitsdichtendem Kontakt mit der Dichtung stehen. Diese Dichtverbindung, wie sie auch bei Flanschen zur Anwendung kommt, hat den Vorteil, dass der Anpressdruck durch die Schrauben sehr fein einzustellen ist. So wird einerseits die Dichtheit des Hybridkollektors erreicht und andererseits das Trägersubstrat durch die Zugkraft der Schrauben nicht überbeansprucht.

Als vorteilhaft erweist es sich, wenn die Durchgangsöffnungen, welche an dem Trägersubstrat vorgesehen sind, im Bereich zwischen der Dichtung und dem Seitenrand des Trägersubstrats, d.h. ausserhalb des Wärmetauscherraums, angeordnet sind. Die Durchgangsöffnungen befinden sich vorzugsweise im Bereich des Trägersubstrats, der nicht abgedichtet werden muss. Sollten jedoch erhöhte Drücke in dem Hybridkollektor vorhanden sein, so ist es auch denkbar, dass im Bereich des Wärmetauscherraums Durchgangsöffnungen vorgesehen sein können. Es versteht sich, dass die verwendeten Schrauben in diesem Fall abdichtende Funktion besitzen müssen.

Zweckmässigerweise ist der Wärmetauscher ein Flachwärmetauscher und das Trägersubstrat eine Solarglasscheibe oder ein Photovoltaikmodul. Als Photovoltaikmodul soll im Rahmen der vorliegenden Erfindung ein oder mehrere Photovoltaik-Zellen verstanden werden, welche zwischen zwei Trägerplatten von der Umgebung hermetisch abgetrennt angeordnet sind. Vorzugsweise ist wenigstens eine der Trägerplatten aus Glas. Der Hybridkollektor ist dadurch äusserst flach ausgeführt und greift auf ausgereifte Technik aus dem Bereich der Sonnenkollektoren zurück.

Zweckmässigerweise ist der der Hybridkollektor für Drücke vom drucklosen Bereich bis etwa 3 bar ausgelegt. Dies sind die Drücke, die standardmässig in Hybridkollektoren auftreten. Denkbar ist es aber auch, wie weiter oben ausgeführt, den Hybridkollektor durch Vorsehen von einer erhöhten Anzahl von Schrauben auch für höhere Drücke auszulegen.

In einer bevorzugten Ausführungsform ist der Hybridkollektor an einer tragenden Fläche, insbesondere einer Gebäudewand oder einem Dach, festlegbar. In einem solchen Fall können die Befestigungsmittel jeweils ein Paar von miteinander fluchtenden Durchgangsöffnungen in dem Trägersubstrat und der Rückwand durchdringen und in der tragenden Fläche verankert werden. Da die Schrauben in dieser Ausführungsform sowohl die Aufgabe der Abdichtung als auch der Halterung übernehmen, ist dieser Hybridkollektor besonders rasch und einfach zu montieren.

In einer weiteren bevorzugten Ausführungsform ist an der Seite des Trägersubstrats, welche der Rückwand zugewandt ist, eine Beschichtung zur Aufnahme von Strahlungsenergie vorgesehen. Diese Massnahme zur möglichst hohen Ausbeute der Sonnenstrahlungsenergie ist in der Solarthermie weit verbreitet und dementsprechend ausgereift. Als Beschichtungen können beispielsweise schwarze Anstriche oder sogenannte selektive Beschichtungen.

Mit Vorteil ist die Dichtung oder die Rückwand durch zwei Rohrstücke durchdrungen, welche dem zirkulierendem Wärmeträger als Eintritt bzw. Austritt in den Wärmetauscherraum dienen, der durch das Trägersubstrat, die Rückwand und die Dichtung definiert ist. Die Wärmetauscherfunktion ist daher mit einfachen konstruktiven Mitteln in den Hybridkollektor integriert.

Dadurch, dass innerhalb des Wärmetauscherraums an den zwei Rohrstücken eine Verteilervorrichtung bzw. eine Sammelvorrichtung für den Wärmeträger vorgesehen sein kann, wird der Wärmeträger sehr fein in dem Wärmetauscherraum verteilt. Dies führt zu einem verbesserten Wärmeübergang, da sich mit dem Mass der Turbulenz der Wärmeträgerströmung der Wärmeübergang verbessert.

In einem besonders bevorzugten Ausführungsbeispiel ist die Rückwand durch einen Abschnitt einer tragenden Fläche, insbesondere einer Gebäudewand, gebildet, welche vorzugsweise feuchteresistent und druckbelastbar ist. Auf eine separate Rückwand kann daher verzichtet werden, wodurch der Hybridkollektor noch kostengünstiger herstellbar ist. Insbesondere, wenn die tragende Fläche als Wärmespeicher wirkt, was in heissen Ländern verstärkt der Fall ist, lässt sich der Hybridkollektor einsetzen, um die tragende Fläche über Nacht abzukühlen. Bei einer besonders grossen Anzahl von einzelnen Hybridkollektoren, wie sie beispielsweise bei Solarkraftwerken vorhanden ist, erweist sich diese Ausführungsform ebenfalls von Vorteil, weil die Trägersubstrate direkt an Fundamentplatten festlegbar sind. Zur Verbesserung der Feuchteresistenz kann die Gebäudewand auch mit einer Kunststoff- oder Aluminiumfolie an der dem Wärmetauscherraum zugewandten Seite beschichtet sein.

In einem anderen Ausführungsbeispiel ist die Glasscheibe wenigstens teilweise frei von Photovoltaik-Zellen. Dadurch kann der solarthermische Aspekt des Hybridkollektors in den Vordergrund gestellt werden. Wird auf PV-Zellen vollständig verzichtet, so kann die Vorrichtung auch als Radiator oder Latentwärmespeicher eingesetzt werden.

In einem weiteren Ausführungsbeispiel ist in dem Wärmetauscherraum ein weiterer Wärmetauscher aufgenommen. Vor allem, wenn ein weiteres Wärmetransfermedium zum Einsatz kommt, das mit dem Wärmeträger nicht in Kontakt treten darf, ist diese Ausführung von Bedeutung. Beispielsweise könnte der weitere Wärmetauscher auch ein Kondensator eines Wärmepumpenkreislaufs sein.

Zweckmässigerweise ist die Rückwand eine Betonwand, in welche die Befestigungsmittel mit einem ihrer Enden eingegossen oder eingeschraubt sein können. Eine derartige Rückwand ist besonders einfach aufgebaut. Durch einfaches Ausgiessen von Negativformen mit Beton unter vorherigem Versetzen der Befestigungsmittel sind diese Rückenwände entsprechend kostengünstig herzustellen.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Vorderansicht eines erfindungsgemässen Hybridkollektors in einer ersten Ausführungsform;
- Figur 2:: einen Schnitt durch den Hybridkollektor aus Figur 1 an der Stelle A-A;
- Figur 3:: eine Vorderansicht des erfindungsgemässen Hybridkollektors in einer zweiten Ausführungsform;
- Figur4:: einen Schnitt durch den Hybridkollektor aus Figur 3 an der Stelle A-A;
- Figur 5:: eine Vorderansicht des erfindungsgemässen Hybridkollektors in einer dritten Ausführungsform;
- Figur 6:: einen Schnitt durch den Hybridkollektor aus Figur 5 an der Stelle A-A;
- Figur 7:: eine Vorderansicht eines Sonnenkollektors;
- Figur 8:: eine Vorderansicht des erfindungsgemässen Hybridkollektors in einer vierten Ausführungsform;
- Figur 9: eine Vorderansicht des erfindungsgemässen Hybridkollektors mit einer ersten Befestigungsvariante;
- Figur 10:: einen Schnitt durch den Hybridkollektor aus Figur 9 an der Stelle A-A;
- Figur 11:: eine Vorderansicht des erfindungsgemässen Hybridkollektors mit einer zweiten Befestigungsvariante;
- Figur 12:: einen Schnitt durch den Hybridkollektor aus Figur 11 an der Stelle A-A;
- Figur 13:: eine Vorderansicht des erfindungsgemässen Hybridkollektors mit einer dritten Befestigungsvariante und
- Figur 14:: einen Schnitt durch den Hybridkollektor aus Figur 13 an der Stelle A-A.
- Figur 15:: Eine Draufsicht auf ein weiteres erfindungsgemässes Ausführungsbeispiel eines Hybridkollektors mit einem PV-Modul umfassend eine Mehrzahl von in einem Raster angeordneten Photovoltaik-Zellen;
- Figur 16:: Einen Querschnitt durch den Hybridkollektor von Figur 15.

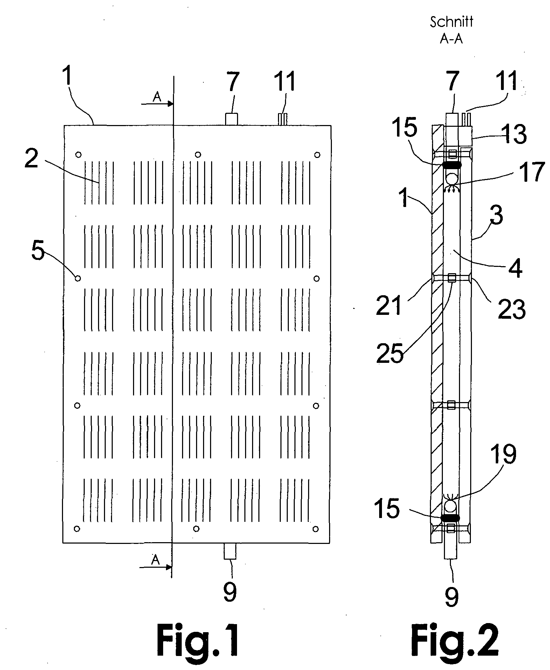

Die Figuren 1 und 2 zeigen einen erfindungsgemässen Hybridkollektor in einer ersten Ausführungsform. Im Allgemeinen wird unter einem Hybridkollektor ein Photovoltaikmodul verstanden, welches mit einem thermischen Sonnenkollektor verbunden ist. Wie eingangs erwähnt, besitzt ein Hybridkollektor einen höheren Gesamtwirkungsgrad, als die Summe der Wirkungsgrade eines einzelnen Photovoltaikmoduls und eines thermischen Sonnenkollektors.

Der Hybridkollektor umfasst ein Trägersubstrat 1 mit einer Mehrzahl von integrierten Photovoltaik-Zellen 2. Das Trägersubstrat 1 besteht normalerweise aus 2 einzelnen Glasscheiben, zwischen welchen die Photovoltaik-Zellen 2 angeordnet sind. Glasscheiben sind vorzugsweise miteinander verklebt, sodass die Photovoltaik-Zellen gegenüber Umwelteinflüssen geschützt sind. Das Trägersubstrat 1 besitzt bevorzugt rechteckige Abmessungen und ist aus Solarglas gefertigt. Eine Rückwand 3 in Gestalt einer Platte ist parallel zu dem Trägersubstrat 1 angeordnet und von dieser durch eine Dichtung 15 beabstandet. Durch das Trägersubstrat 1, die Rückwand 3 und die Dichtung 15 ist ein Wärmetauscherraum 4 gebildet. Der Wärmetauscherraum 4 dient der Aufnahme eines zirkulierenden Wärmeträgers, beispielsweise Wasser bei einem Einsatz in warmen Ländern oder einer Wasser-Glykol Mischung bei einem Einsatz in Ländern, in denen die Aussentemperatur unter 0 °C sinken kann. Der Wärmeträger kann sowohl drucklos als auch unter Druck geführt sein. Der erfindungsgemässe Hybridkollektor ermöglicht es demnach, dass der Wärmeträger direkt mit der Rückseite des Trägersubstrats 1 in Kontakt tritt und nicht durch zusätzliche Wärmeaustauschflächen von dieser getrennt ist. Dieser direkte Kontakt hat zwei äusserst erwünschte Effekte. Einerseits werden die Photovoltaik-Zellen 2 durch den verbesserten Wärmeübergang besser gekühlt, als wenn sich zwischen dem Wärmeträger und dem Trägersubstrat 1 noch eine weitere Wärmeaustauschfläche befindet. Da sich der Wirkungsgrad der Photovoltaik-Zellen 2 um 5% je 10°C erhöhter Betriebtemperatur verschlechtert, trägt der verbesserte Wärmeübergang direkt zur Verbesserung des Wirkungsgrades der Photovoltaik-Zellen 2 bei. Andererseits wird die Temperatur des Wärmeträgers durch den verbesserten Wärmeübergang erhöht. Der Wärmeträger verlässt demnach den erfindungsgemässen Hybridkollektor mit erhöhter Temperatur im Vergleich zu Hybridkollektoren des Stands der Technik. Der Wärmeträger tritt durch einen Eintrittskanal 7, beispielsweise in Gestalt eines ersten Rohrstücks, in den Wärmetauscherraum 4 ein. Durch einen Austrittskanal 9, beispielsweise ein zweites Rohrstück verlässt der Wärmeträger den Wärmetauscherraum mit erhöhter Temperatur. Aus Figur 2 ist zu erkennen, dass das erste und zweite Rohrstück 7,9 die Dichtung des Hybridkollektors seitlich durchdringen. Der Hybridkollektor besitzt auch eine Abtaufunktion. Ist der Hybridkollektor im Winter mit Schnee bedeckt, so kann der Wärmeträger dazu benutzt werden, Wärme auf das schnee- und/oder eisbedeckte Trägersubstrat zu übertragen. Schneedecken und Eisschichten tauen ab, wodurch die Aussenseite des Trägersubstrats frei gelegt wird. Ein mühsames Entfernen von Schnee und Eis ist vermieden und der Hybridkollektor ist auch nach Schneefall durch die Abtaufunktion sofort wieder einsatzbereit.

Die Dichtung 15 verläuft entlang des Randbereichs des Trägersubstrats 1 und der Rückwand 3 in Umfangsrichtung und ist bevorzugt eine in sich geschlossene Gummi oder Elastomerdichtung. Im Bereich zwischen der Dichtung 15 und den Seitenrändern sind an dem Trägersubstrat 1 und der Rückwand 3 eine Mehrzahl von paarweise fluchtenden Durchgangsöffnungen 5 vorgesehen. Damit die Dichtung dichtend an das Trägersubstrat 1 und die Rückwand 3 gepresst ist, sind durch jede Durchgangsöffnung 5 eine Frontschraube 21 bzw. eine Rückschraube 23 geführt. Eine Frontschraube 21 und eine Rückschraube 23, welche miteinander fluchten, wirken durch ihre Aussengewinde mit dem Innengewinde einer Gewindemuffe 25 zusammen. Das Trägersubstrat 1 und die Rückwand 3 können durch Festziehen der Front- bzw. Rückschrauben aneinender gezogen werden. Der Anpressdruck an die Dichtung 15 ist daher äusserst genau einstellbar. Dies ist von Bedeutung, da das Trägersubstrat 1 einerseits nicht überbelastet werden darf und andererseits der Übergang zwischen der Dichtung 15 und dem Trägersubstrat 1 bzw. der Rückwand 3 dicht sein muss. Beim Auftreten von hohen Drücken ist es denkbar, dass auch im Bereich des Wärmetauscherraums 4 an dem Trägersubstrat 1 als auch an der Rückwand 3 Durchgangsöffnungen 5 vorgesehen sind. Das Trägersubstrat 1 und die Rückwand 3 können dann an zusätzlichen Stellen, beispielsweise durch fluiddichte Schraubverbindungen aneinander gehalten sein.

Das Trägersubstrat 1 besitzt eine übliche Photovoltaik Anschlussdose 13 und einen elektrischen Anschluss 11 zur Weiterleitung des erzeugten Gleichstroms. Um eine gute Verteilung des Wärmeträgers in dem Wärmetauscherraum 4 zu erzielen, sind innerhalb des Wärmetauscherraums 4 ein Verteilerrohr 17 bzw. ein Sammelrohr 19 vorgesehen, welche mit dem ersten bzw. zweiten Rohrstück 7,9 in Verbindung stehen. Eine verstärkte Verwirbelung des Wärmeträgers führt zu einem verbesserten Wärmeübergang zwischen dem Trägersubstrat und dem Wärmeträger.

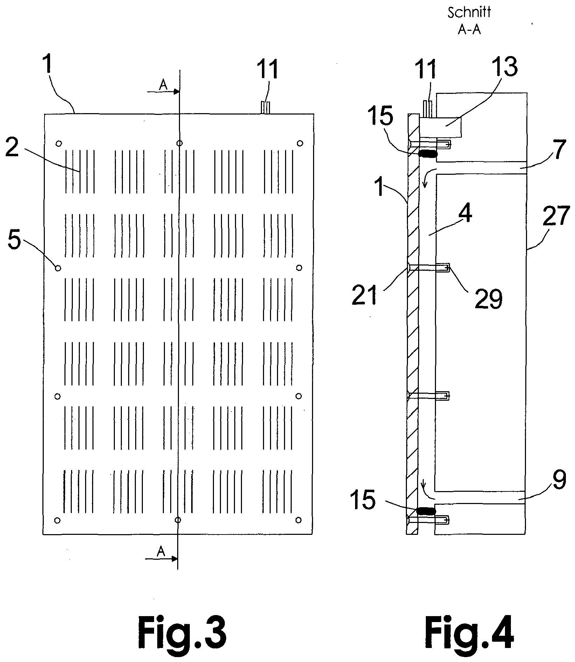

In den Figuren 3 und 4 ist ein Ausführungsbeispiel gezeigt, bei welchem das Trägersubstrat direkt an einer tragenden Fläche oder Struktur, wie einer Gebäudewand 27 oder einem Dach, befestigt ist. Auch ist es möglich, das Trägersubstrat 1 direkt an einer Platte, z.B. aus Beton, oder einer Fundamentplatte zu befestigen. Diese Montagemöglichkeit ist vor allem beim Einsatz des Hybridkollektors in Solarkraftwerken von Interesse. Für die tragende Fläche soll im Folgenden beispielhaft die Gebäudewand 27 stehen, welche die Rückwand 3 des Wärmetauscherraums 4 bildet. Das Trägersubstrat 1 ist wiederum durch die Dichtung 15 von der Gebäudewand 27 beabstandet. Es versteht sich, dass die Gebäudewand 27 für die beschriebene Ausführungsform feuchteresistent und druckbelastbar sein muss. Als gut geeignetes Material kann Beton mit einem speziellen Schutzanstrich verwendet werden. Figur 4 zeigt weiterhin, dass in diesem Ausführungsbeispiel der Eintritts- und Austrittskanal 7,9 durch die Gebäudewand 27 hindurchgeführt sind. Die Befestigung der Trägerplatte bzw. der Dichtigkeitsaufbau zwischen der Dichtung 15 und dem Trägersubstrat 1 einerseits und der Gebäudewand 27 andererseits erfolgt durch die Frontschrauben 21. Die Frontschrauben 21 sind durch die Durchgangsöffnungen 5 des Trägersubstrats 1 hindurchgeführt und mit der Gebäudewand 27 durch eine Verankerung, beispielsweise eine Schraub-Dübel-Verbindung, verankert.

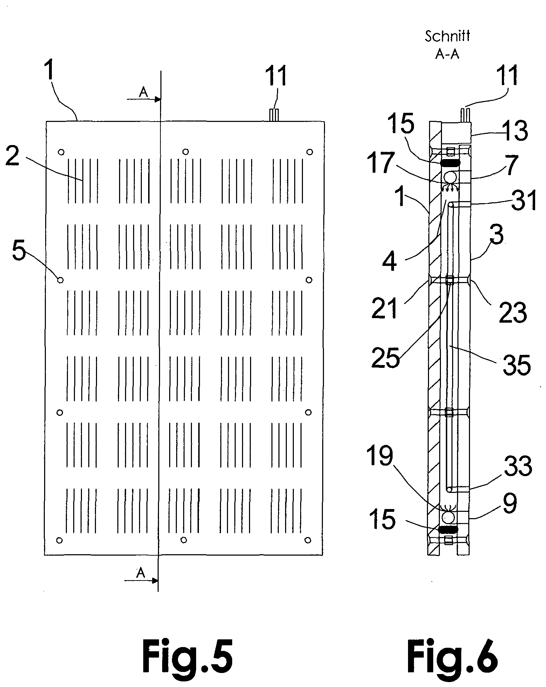

Die Figuren 5 und 6 zeigen ein drittes Ausführungsbeispiel bei dem in dem Wärmetauscherraum 4 ein Wärmetauscher 35 aufgenommen ist. Die Wärme des Wärmeträgers wird bei dieser Ausführung auf den Wärmetauscher 35 bzw. vice versa übertragen. Diese Ausführung macht beispielsweise Sinn, wenn durch den Wärmetauscher ein Medium fliesst, welches in einem geschlossenen Kreislauf geführt ist oder mit dem Wärmeträger nicht vermischt werden soll. Der Wärmetauscher 35 kann auch als Kondensator eines Wärmepumpenkreislaufs angewendet werden, indem Wärme von dem Wärmetauscher 35 auf den Wärmeträger in dem Wärmetauscherraum 4 übertragen wird. Der erste und zweite Anschluss 31,33 des Wärmetauschers 35 sind vorzugsweise an der Rückwand 3 vorgesehen.

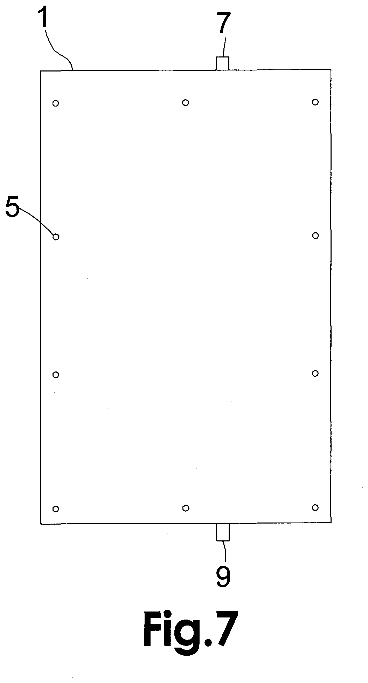

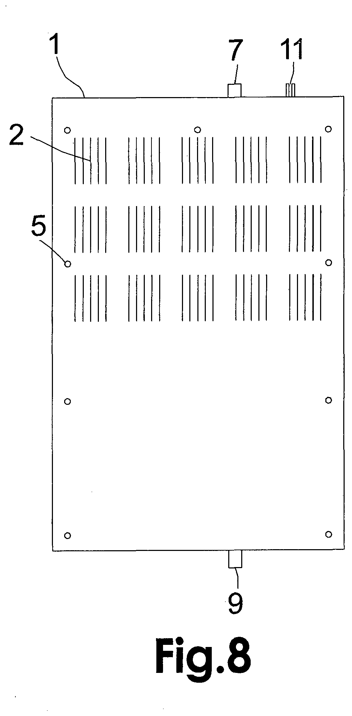

In den Figuren 7 und 8 ist das Photovoltaikmodul 1 ganz bzw. teilweise durch ein einfaches Solarglas ohne Photovoltaik-Zellen ersetzt. Diese Ausführungsformen machen dann Sinn, wenn die Erhöhung der Temperatur des Wärmeträgers im Vordergrund steht und mehr thermische als photovoltaische Leistung benötigt wird. Die Ausführungsform aus Figur 7 könnte auch als Radiator oder Latentwärmespeicher eingesetzt werden. Bei diesen Anwendungen macht es allerdings Sinn, das Trägersubstrat 1 durch ein Material mit besseren wärmeleitenden Eigenschaften zu ersetzen.

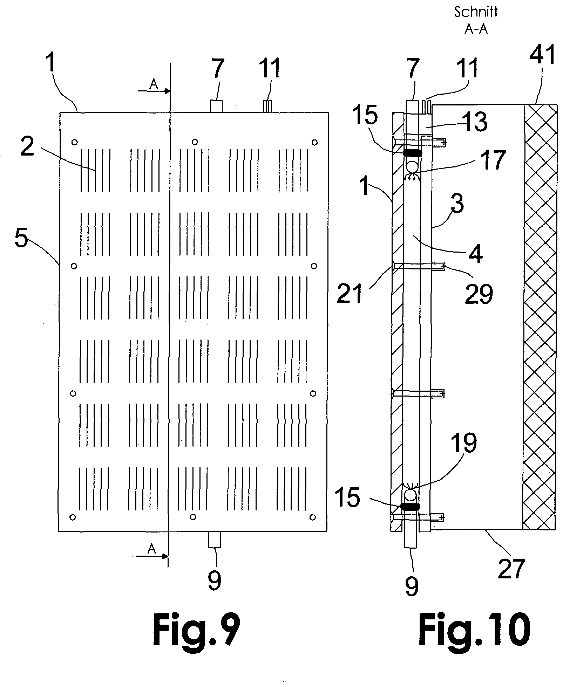

In den Figuren 9 und 10 ist ein Ausführungsbeispiel gezeigt, bei dem der Hybridkollektor an der Gebäudewand 27 befestigt ist. Die Gebäudewand besitzt eine Innenisolierung 41, um Innenräume gegenüber hohen Aussentemperaturen zu isolieren. Diese Anordnung des Hybridkollektors macht in Ländern mit hohen Aussentemperaturen besonders Sinn. Die Gebäudewand 27 fungiert als Wärmespeicher. Die Gebäudewand 27 gibt die über den Tag gespeicherte Wärme über die wärmeleitfähige Rückwand 3 an den Wärmeträger ab. Der Wärmeübergang von der Gebäudewand 27 auf die wärmeleitfähige Rückwand erfolgt besonders rasch. So wird die Gebäudewand über Nacht durch den Hybridkollektor zusätzlich abgekühlt und kann über Tags wieder vermehrt Wärme aufnehmen.

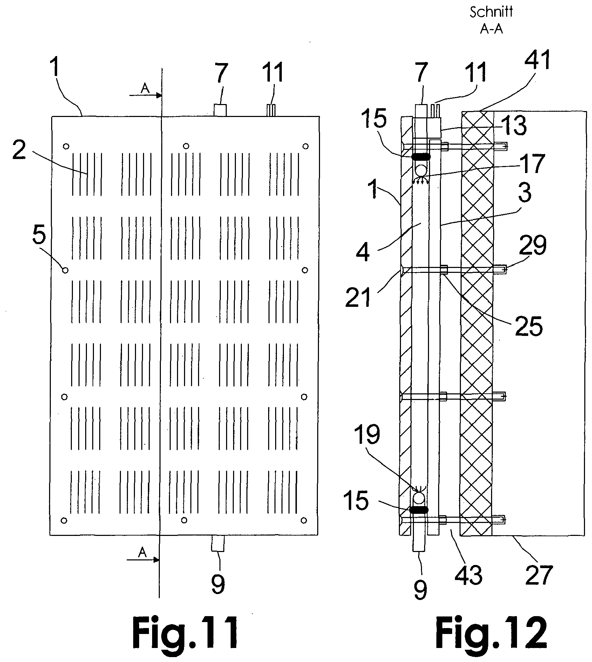

In den Figuren 11 bis 14 sind Ausführungsbeispiele gezeigt, wie der Hybridkollektor an einer Gebäudewand mit einer Aussenisolierung 37 befestigt werden kann. Soll zwischen der Rückwand 3 und der Aussenisolierung 37 ein Abstand 43 vorgesehen sein, so sind relativ lange Frontschrauben 21 zu verwenden, welche durch die fluchtenden Paare von Durchgangsöffnungen 5 hindurchgeführt sind. Die Länge der Frontschrauben ergibt sich bei diesem Ausführungsbeispiel aus der Summe der Stärke des Hybridkollektors, dem Abstand 43, der Stärke der Aussenisolierung 37 und einem Überstand zur Verankerung der Frontschrauben in der Gebäudewand 27. Die Verankerung 29 kann dabei wieder wie weiter oben ausgeführt werden. Die Abdichtung des Hybridkollektors erfolgt dadurch, dass an der Aussenseite der Rückwand 3 Gewindemuffen 25 mit den Frontschrauben 21 zusammenwirken. Der Anpressdruck des Glasssubstrats 1 bzw. der Rückwand 3 gegenüber der Dichtung 15 ist daher auch in diesem Ausführungsbeispiel sehr genau einstellbar. Die Montageausführung, welche in den Figuren 11 und 12 gezeigt ist, ist von Bedeutung, wenn die Rückwand 3 hinterlüftete sein soll.

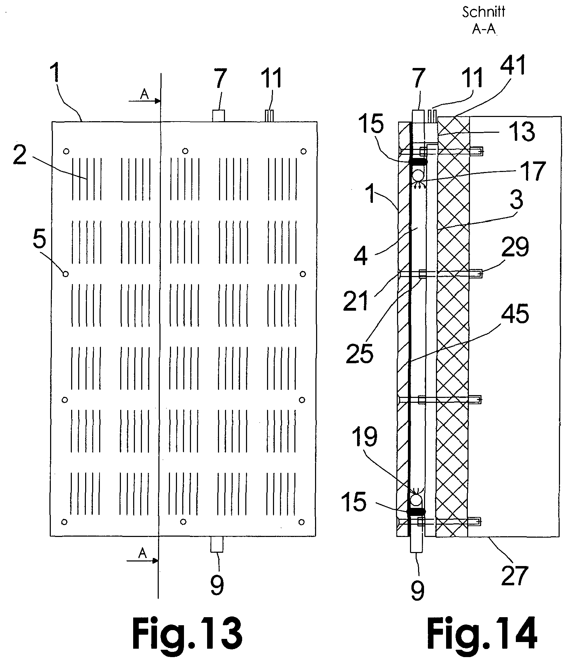

In den Figuren 13 und 14 ist ein Ausführungsbeispiel gezeigt, bei dem der Hybridkollektor in Kontakt zu der Aussenisolierung 37 steht. In diesem Fall lässt sich der Anpressdruck dadurch einstellen, dass der Abstand zwischen dem Trägersubstrat 1 und der Rückwand 3 durch Gewindemuffen 25 eingestellt wird. Die Gewindemuffen sind zwischen dem Trägersubstrat 1 und der Rückwand 3 auf die Frontschrauben 21 aufgeschraubt und dienen der Rückwand als Anschlag. Der Anpressdruck des Trägersubstrats bzw. der Rückwand ist daher auch bei diesem Montagebeispiel sehr genau durch die Gewindemuffe 25 einstellbar. Die Aussenisolierung 37 dient nicht nur der Isolierung der Gebäudewand 27, sondern auch der Isolierung der Rückwand 3. In der Figur 14 ist gezeigt, dass der dem Wärmetauscherraum 4 zugewandte Seite des Trägersubstrats eine Beschichtung 45 zur Aufnahme von Strahlungsenergie angebracht sein kann. Die Beschichtung 45 bewirkt, dass das Trägersubstrat 1 als Absorber wirkt.

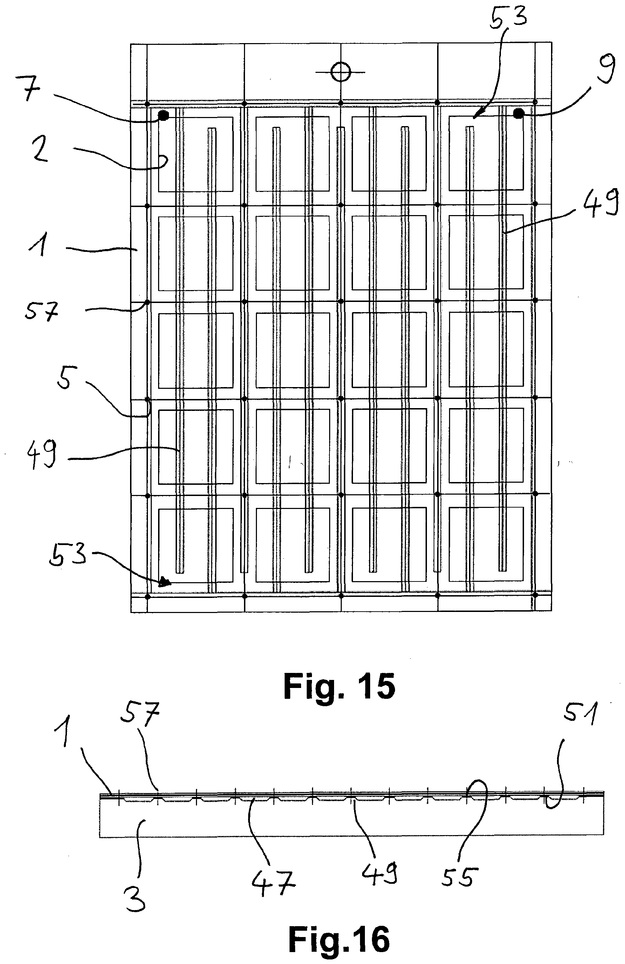

Im Ausführungsbeispiel gemäss den Figuren 15 und 16 ist die Rückwand 3 des Hybridkollektors 59 aus Beton oder einem anderen Material mit einer guten Wärmespeicherkapazität gebildet. An der zum Trägersubstrat 1 orientierten Seite der Rückwand 3 sind Kanäle 47 ausgebildet, in welchen der Wärmeträger im Betrieb zirkulieren kann. Die Kanäle 47 sind vorzugsweise parallel zueinander und durch Erhöhungen 49 mit flachen Abschnitten 51 voneinander getrennt. Durch die Erhöhungen 49 sind die Kanäle 47 und damit der Weg des Wärmeträgers, den er vom Eintrittskanal 7 zum Austrittskanal 9 zurücklegen muss, definiert. Vorliegend sind die Erhöhungen 49 mittels Durchgängen 53 unterbrochen, die jeweils zwei benachbarte Kanäle 47 strömungstechnisch miteinander verbindet. Die Durchgänge 53 sind abwechslungsweise an gegenüberliegenden Seiten der Rückwand 3 ausgebildet, sodass ein hin- und hergehender Weg des Wärmeträgers ,vorzugsweise in Mäanderform, definiert ist. Andere Verläufe der Kanäle sind jedoch denkbar und können entsprechend den gestellten Anforderungen vorgesehen werden.

Auf den flachen Abschnitten 51 ist ein Dichtungsband 55 angeordnet. Um die Spannungen des Trägersubstrats 1 möglichst gering zu halten, beträgt die Dicke des Dichtungsbands 55 vorzugsweise höchstens 3 bis 4 mm. Bei dieser Dicke des Dichtungsbands 55 ist das Trägersubstrat ausreichend von den flachen Abschnitten 51 gestützt, ohne durch eine zu grosse Dicke des Dichtbands 55 Spannungen aufnehmen zu müssen. Befestigungselemente 57, vorzugsweise Schrauben, verbinden das Trägersubstrat 1 mit der darunterliegenden Rückwand 3 im Bereich der flachen Abschnitte 51. Auf diese Weise kann in einfacher Weise eine gute Dichtung erreicht werden. Grundsätzlich könnten die Kanäle 47 auch einfach durch entsprechende Dichtstreifen, z.B. Silikon, oder Flachdichtungsbänder ausgebildet werden. Diese Variante hätte den Vorteil, dass in der Rückwand 3 keine Kanäle ausgebildet werden müssten.

Am Eintritts- und Austrittskanal 7,9 kann jeweils ein entsprechender Anschlussstutzen vorgesehen sein. Dieser kann grundsätzlich nach vorne, d.h. durch das Trägersubstrat hindurch, nach hinten durch die Rückwand 3 hindurch oder seitlich in der Rückwand 3 eingelegt sein.

Wie anhand des gezeigten Ausführungsbeispiels feststellbar ist, umfasst das PV-Modul eine Mehrzahl von vorzugsweise rasterartig und in Abstand voneinander angeordneten Photovoltaik-Zellen 2. Deren elektrische Verbindung ist nicht dargestellt, da dies nicht erfindungswesentlich ist und dem Fachmann geläufig ist. Durch die Beabstandung der Photovoltaik-Zellen 2 ist ausreichend Platz für die Befestigungsschrauben vorhanden.

Für die Herstellung eines erfindungsgemässen Hybridkollektors können grundsätzlich konventionelle PV-Paneele eingesetzt werden. Diese werden zusätzlich an vorbestimmten Stellen mit Durchgangsöffnungen 5, insbesondere Bohrungen, für die Befestigungselemente versehen. Damit lassen sich die PV-Paneele an beliebigen Tragstrukturen, wie oben beschrieben, befestigen.

### Legende:

- 1: Trägersubstrat, Glasscheibe
- 2: Photovoltaik-Zelle
- 3: Rückwand
- 4: Wärmetauscherraum
- 5: Durchgangsöffnungen
- 7: Eintrittskanal, erstes Rohrstück
- 9: Austrittskanal, zweites Rohrstück
- 11: Elektrischer Anschluss
- 13: Photovoltaik-Anschlussdose
- 15: Dichtung
- 17: Verteilerrohr
- 19: Sammelrohr
- 21: Frontschraube
- 23: Rückschraube
- 25: Gewindemuffe
- 27: Gebäudewand
- 29: Verankerung
- 31: Erster Anschluss
- 33: Zweiter Anschluss
- 35: Wärmetauscher
- 37: Aussenisolierung
- 41: Innenisolierung
- 43: Abstand
- 45: Beschichtung zur Aufnahme von Strahlungsenergie
- 47: Kanäle
- 51: flache Abschnitte neben den Kanälen
- 53: Durchgänge
- 55: Dichtungsband
- 57: Befestigungselemente, Schrauben

## Patentansprüche

1. Hybridkollektor mit
- wenigstens einer Photovoltaik-Zelle (2), welche zwischen zwei aus Glas oder Kunststoff hergestellten Trägerplatten angeordnet ist, wodurch ein Trägerssubstrat (1) definiert ist,
- einer an der Rückseite des Trägersubstrats (1) angeordneten, beabstandeten Rückwand (3),
- mindestens einer vorzugsweise randständigen Dichtung (15), welche zwischen dem Trägersubstrat (1) und der Rückwand (3) vorgesehen ist, um einen von einem Wärmeträger durchströmbaren Wärmetauscherraum (4) zu bilden und
- eine Mehrzahl von Befestigungsmitteln (21,23,57), welche die Rückwand (3) und das Trägersubstrat (1) zusammen halten,
**dadurch gekennzeichnet,**
**dass** die Befestigungsmittel Schrauben (21,23,57) sind, welche jeweils durch ein Paar fluchtender, an dem Trägersubstrat (1) und der Rückwand (3) vorgesehene Durchgangsöffnungen (5) hindurchgeführt sind.

2. Hybridkollektor nach Anspruch 1, **dadurch gekennzeichnet, dass** die Dichtung (15) flüssigkeitsdichtend mit dem Trägersubstrat (1) und der Rückwand (3) zusammenwirkt.

3. Hybridkollektor nach Anspruch 1 oder 2, **dadurch gekennzeichnet, dass** die Dichtung (15) im Abstand vom Rand des Trägersubstrats (1) angeordnet ist.

4. Hybridkollektor nach einem der Ansprüche 1 bis 3, **dadurch gekennzeichnet, dass** die Schrauben (21,23,57) ausserhalb und innerhalb des durch die Dichtung (15) definierten Wärmetauscherraums (4) vorgesehen sind.

5. Hybridkollektor nach einem der Ansprüche 1 bis 4, **dadurch gekennzeichnet, dass** die Mehrzahl von Schrauben (21,23,57) in vorzugsweise regelrnässigen Abständen voneinander angeordnet ist.

6. Hybridkollektor nach einem der Ansprüche 1 bis 5, **dadurch gekennzeichnet, dass** die Schrauben (21,23,57) mit Gewindemuffen (25) oder Schraubenmuttern verschraubt sind.

7. Hybridkollektor nach Anspruch 6, **dadurch gekennzeichnet, dass** die Durchgangsöffnungen (5), welche an dem Trägersubstrat (1) vorgesehen sind, im Bereich zwischen der Dichtung (15) und dem Seitenrand des Trägersubstrats (1) vorgesehen sind.

8. Hybridkollektor nach einem der Ansprüche 1 bis 7, **dadurch gekennzeichnet, dass** der Hybridkollektor für Drücke vom drucklosen Bereich bis etwa 3 bar ausgelegt ist.

9. Hybridkollektor nach einem der Ansprüche 4 bis 8, **dadurch gekennzeichnet, dass** der Hybridkollektor an einer tragenden Fläche, insbesondere einer Gebäudewand (27) oder einem Dach, festlegbar ist, indem die Befestigungsmittel jeweils ein Paar von Durchgangsöffnungen (5) in dem Trägersubstrat (1) und der Rückwand (3) durchdringen und in der tragenden Fläche verankert sind.

10. Hybridkollektor nach einem der Ansprüche 1 bis 9, **dadurch gekennzeichnet, dass** an der Seite des Trägersubstrats (1), welche der Rückwand (3) zugewandt ist, eine Beschichtung (45) zur Aufnahme von Strahlungsenergie vorgesehen ist.

11. Hybridkollektor nach einem der Ansprüche 1 bis 10, **dadurch gekennzeichnet, dass** die Dichtung (15) oder die Rückwand (3) durch zwei Rohrstücke (7,9) durchdrungen ist, welche dem zirkulierenden Wärmeträger als Eintritt bzw. Austritt in den Wärmetauscherraum (4) dienen, der durch das Trägersubstrat (1), die Rückwand (3) und die Dichtung (15) definiert ist.

12. Hybridkollektor nach Anspruch 11, **dadurch gekennzeichnet, dass** innerhalb des Wärmetauscherraums (4) an den zwei Rohrstücken (7,9) eine Verteilervorrichtung (17) bzw. eine Sammelvorrichtung (19) für den Wärmeträger vorgesehen ist.

13. Hybridkollektor nach einem der Ansprüche 1 bis 12, dadurch gekenntzeichnet, dass die Rückwand durch einen Abschnitt einer tragenden Fläche, insbesondere einer Gebäudewand (27), gebildet ist, welche feuchteresistent und druckbelastbar ist.

14. Hybridkollektor nach einem der Ansprüche 1 bis 13, **dadurch gekennzeichnet, dass** das Trägersubstrat (1) wenigstens teilweise frei von Photovoltaik-Zellen (2) ist.

15. Hybridkollektor nach einem der Ansprüche 1 bis 14, **dadurch gekennzeichnet, dass** die Rückwand eine Betonwand (3) ist, in welche die Befestigungsmittel (21,23,57) mit einem ihrer Enden eingegossen oder eingeschraubt sein können.

## Claims

1. Hybrid collector with
- at least one photovoltaic cell (2) that is placed between two carrier plates made of glass or plastics so that a carrier substrate (1) is defined,
- a spaced rear wall (3) placed on the rear side of the carrier substrate (1),
- at least a gasket (15) preferably on the edge that is provided between the carrier substrate (1) and the rear wall (3) in order to form a heat exchanger space (4) through which a heat transfer medium can flow
and
- a multitude of fixing means (21, 23, 57) that holds the rear wall (3) and the carrier substrate (1) together,
**characterized in**
**that** the fixing means are screws (21, 23, 57) that are guided through respectively a pair of aligned passage openings (5) provided on the carrier substrate (1) and the rear wall (3).

2. Hybrid collector according to claim 1, **characterized in that** the gasket (15) cooperates with the carrier substrate (1) and the rear wall (3) to make them fluid-tight.

3. Hybrid collector according to claim 1 or 2, **characterized in that** the gasket (15) is placed spaced from the edge of the carrier substrate (1).

4. Hybrid collector according to one of the claims 1 to 3, **characterized in that** the screws (21, 23, 57) are provided outside and inside the heat exchanger space (4) defined by the gasket (15).

5. Hybrid collector according to one of the claims 1 to 4, **characterized in that** the multitude of screws (21, 23, 57) is placed preferably regularly spaced from each other.

6. Hybrid collector according to one of the claims 1 to 5, **characterized in that** the screws (21, 23, 57) are screwed with threaded bushings (25) or nuts.

7. Hybrid collector according to claim 6, **characterized in that** the passage openings (5) that are provided on the carrier substrate (1) are provided in the area between the gasket (15) and the side edge of the carrier substrate (1).

8. Hybrid collector according to one of the claims 1 to 7, **characterized in that** the hybrid collector is designed for pressures from the pressure-free area to approximately 3 bar.

9. Hybrid collector according to one of the claims 4 to 8, **characterized in that** the hybrid collector can be fixed on a carrying surface, in particular to the wall of a building (27) or to a roof, the fixing means penetrating respectively through a pair of passage openings (5) in the carrier substrate (1) and the rear wall (3) and being anchored in the carrying surface.

10. Hybrid collector according to one of the claims 1 to 9, **characterized in that** a coating (45) for absorbing radiation energy is provided on the side of the carrier substrate (1) that is turned to the rear wall (3).

11. Hybrid collector according to one of the claims 1 to 10, **characterized in that** the gasket (15) or the rear wall (3) is penetrated by two pipe sections (7, 9) that serve the circulating heat transfer medium as inlet or outlet into the heat exchanger space (4) that is defined by the carrier substrate (1), the rear wall (3) and the gasket (15).

12. Hybrid collector according to claim 11, **characterized in that** a distribution device (17) or a collecting device (19) is provided for the heat transfer medium inside the heat exchanger space (4) on the two pipe sections (7, 9).

13. Hybrid collector according to one of the claims 1 to 12, **characterized in that** the rear wall is formed by a section of a carrying surface, in particular of the wall of a building (27) that is resistant to moisture and pressure.

14. Hybrid collector according to one of the claims 1 to 13, **characterized in that** the carrier substrate (1) is at least partially free from photovoltaic cells (2).

15. Hybrid collector according to one of the claims 1 to 14, **characterized in that** the rear wall is a concrete wall (3) into which the fixing means (21, 23, 57) can be cast or screwed wit hone of their ends.

## Revendications

1. Collecteur hybride avec
- au moins une cellule photovoltaïque (2) qui est placée entre deux plaques de support fabriquées en verre ou en matière plastique si bien qu'il est défini un substrat de support (1),
- une paroi postérieure (3) espacée placée au dos du substrat de support (1),
- au moins une étanchéité de préférence sur le bord qui est prévue entre le substrat de support (1) et la paroi postérieure (3) pour former un espace d'échangeur thermique (4) qui peut être traversé par un agent caloporteur
et
- une multitude de moyens de fixation (21, 23, 57) qui maintiennent ensemble la paroi postérieure (3) et le substrat de support (1),
**caractérisé en ce**
**que** les moyens de fixation sont des vis (21, 23, 57) qui traversent respectivement une paire d'ouvertures de passage (5) alignées, prévues sur le substrat de support (1) et la paroi postérieure (3).

2. Collecteur hybride selon la revendication 1, **caractérisé en ce que** l'étanchéité (15) coopère avec le substrat de support (1) et la paroi postérieure (3) en les rendant étanches au liquide.

3. Collecteur hybride selon la revendication 1 ou 2, **caractérisé en ce que** l'étanchéité (15) est placée espacée du bord du substrat de support (1).

4. Collecteur hybride selon l'une des revendications 1 à 3, **caractérisé en ce que** les vis (21, 23, 57) sont prévues à l'extérieur et à l'intérieur de l'espace d'échangeur thermique (4) défini par l'étanchéité (15).

5. Collecteur hybride selon l'une des revendications 1 à 4, **caractérisé en ce que** la plupart des vis (21, 23, 57) sont placées espacées de préférence régulièrement les unes des autres.

6. Collecteur hybride selon l'une des revendications 1 à 5, **caractérisé en ce que** les vis (21, 23, 57) sont vissées avec des manchons taraudés (25) ou des écrous.

7. Collecteur hybride selon la revendication 6, **caractérisé en ce que** les ouvertures de passage (5) qui sont prévues sur le substrat de support (1) sont prévues dans la zone entre l'étanchéité (15) et le bord latéral du substrat de support (1).

8. Collecteur hybride selon l'une des revendications 1 à 7, **caractérisé en ce que** le collecteur hybride est conçu pour des pressions allant du domaine sans pression jusqu'à environ 3 bar.

9. Collecteur hybride selon l'une des revendications 4 à 8, **caractérisé en ce que** le collecteur hybride peut être fixé sur une surface porteuse, en particulier sur un mur de bâtiment (27) ou un toit, les moyens de fixation traversant respectivement une paire d'ouvertures de passage (5) dans le substrat de support (1) et la paroi postérieure (3) et étant ancrés dans la surface porteuse.

10. Collecteur hybride selon l'une des revendications 1 à 9, **caractérisé en ce qu'**une enduction (45) pour capter l'énergie de rayonnement est prévue sur le côté du substrat de support (1) qui est tourné vers la paroi postérieure (3).

11. Collecteur hybride selon l'une des revendications 1 à 10, **caractérisé en ce que** l'étanchéité (15) ou la paroi postérieure (3) est traversée par deux sections de tuyau (7, 9) qui servent à l'agent caloporteur qui circule d'entrée ou de sortie dans l'espace d'échangeur thermique (4) qui est défini par le substrat de support (1), la paroi postérieure (3) et l'étanchéité (15).

12. Collecteur hybride selon la revendication 11, **caractérisé en ce qu'**un dispositif distributeur (17) ou un dispositif collecteur (19) est prévu pour l'agent caloporteur à l'intérieur de l'espace d'échangeur thermique (4) sur les deux sections de tuyau (7, 9).

13. Collecteur hybride selon l'une des revendications 1 à 12, **caractérisé en ce que** la paroi postérieure est formée par une section d'une surface porteuse, en particulier d'un mur de bâtiment (27) qui est résistant à l'humidité et à la pression.

14. Collecteur hybride selon l'une des revendications 1 à 13, **caractérisé en ce que** le substrat de support (1) est au moins partiellement exempt de cellules photovoltaïque (2).

15. Collecteur hybride selon l'une des revendications 1 à 14, **caractérisé en ce que** la paroi postérieure est un mur de béton (3) dans lequel les moyens de fixation (21, 23, 57) peuvent être coulés ou vissés avec l'une de leurs extrémités.
